# FASCICULE DE BREVET EUROPEEN

(11) **EP 1 555 919 B1**
(45) Date de publication et mention de la délivrance du brevet: **23.05.2007**
(21) Numéro de dépôt: 03809358.9
(22) Date de dépôt: 15.10.2003
(51) Int. Cl.: A47J 27/04, A47J 36/20

(54) **BASE DE PRODUCTION DE VAPEUR POUR CUISEUR VAPEUR COMPORTANT UN SUPPORT A AROMATES**
DAMPFHERSTELLUNGSBASIS FÜR EINEN DAMPFKOCHER MIT EINEM AROMASTOFFTRÄGER
VAPOUR PRODUCTION BASE FOR STEAM COOKER COMPRISING AN AROMATIC SUPPORT

(30) Priorité: 23.10.2002 FR 0213253; 19.06.2003 FR 0307414
(43) Date de publication de la demande: 27.07.2005
(73) Titulaire: SEB S.A., 69130 Ecully (FR)
(72) Inventeur: PRETRE, Nicolas, F-21000 Dijon (FR)
(74) Mandataire: Kiehl, Hubert
(86) Numéro de dépôt international: PCT/FR2003/003042
(87) Numéro de publication internationale: WO 2004/037055

(56) Documents cités:
- EP-B- 0 780 078
- US-A- 448 886
- US-A- 3 078 783
- US-A- 5 275 094
- US-A- 5 794 525
- US-A- 5 988 045

## Description

La présente invention concerne le domaine technique des appareils de cuisson à la vapeur.

Les cuiseurs vapeur comportent un ou plusieurs récipients de cuisson disposés sur une base de production de vapeur. Les récipients comportent un fond perforé permettant à la vapeur de s'élever en passant autour des aliments disposés sur le fond perforé. La base de production de vapeur peut disposer ou non d'un moyen de chauffage autonome de l'eau.

Il est connu du document EP 0 780 078 de réaliser un cuiseur vapeur comportant un support à aromates. Ce support comporte une grille disposée dans le flux de vapeur entre la zone de production de vapeur et le récipient contenant les aliments à cuire. La grille est disposée au travers d'une ouverture d'un bac récupérateur de jus. Le bac récupérateur de jus est agencé entre la base de production de vapeur et le récipient de cuisson. Le bac récupérateur de jus comporte des ouvertures supplémentaires pour permettre à la vapeur de s'échapper si la grille est trop chargée en aromates. Cette disposition évite qu'un excès de pression se forme dans la base chauffante, mais elle contribue à réduire l'efficacité de l'aromatisation. De plus, des débris d'aromates peuvent retomber sur l'élément chauffant.

Le but de la présente invention est de proposer une base de production de vapeur pour un cuiseur vapeur, prévue pour l'utilisation d'aromates, dans laquelle le nettoyage lié à l'utilisation d'aromates est simplifié.

Un autre but de la présente invention est de proposer une base de production de vapeur pour un cuiseur vapeur, prévue pour l'utilisation de liquides aromatiques.

Ce but est atteint avec une base de production de vapeur pour cuiseur vapeur selon les caractéristiques de la revendication 1.

Le support à aromates permet ainsi de recevoir des liquides aromatiques. Le chauffage par la vapeur permet de limiter les températures atteintes par le récipient et son contenu.

Selon un mode de réalisation avantageux, la base de production de vapeur comporte un élément chauffant associé à la chambre d'ébullition.

Alors, selon une forme de réalisation, l'élément chauffant présente un sommet formant une protubérance par rapport au fond de la chambre d'ébullition. D'autres formes de réalisation sont envisageables, notamment un fond chauffant ou une chaudière tubulaire.

Avantageusement alors, le fond du récipient est agencé plus bas que le sommet de l'élément chauffant. Dans le cas d'un élément chauffant formant une protubérance, cette disposition permet de limiter la hauteur de la base de production de vapeur.

Avantageusement, le support à aromates est agencé latéralement par rapport à la chambre d'ébullition. Cette disposition permet d'obtenir un flux de vapeurs aromatiques parallèle à la vapeur issue de la chambre d'ébullition.

Avantageusement encore, pour faciliter l'échauffement du liquide contenu dans le récipient, un élément, réalisé en matériau bon conducteur de chaleur, par exemple en aluminium, agencé dans ou autour de la chambre d'ébullition, est relié thermiquement à un autre élément réalisé en matériau bon conducteur de chaleur, appartenant au récipient.

Avantageusement alors, ces deux éléments sont formés par une paroi latérale du récipient délimitant partiellement la périphérie de la chambre d'ébullition.

Selon une caractéristique avantageuse, la base de production de vapeur comporte un réservoir d'eau alimentant la chambre d'ébullition. La quantité d'eau portée à ébullition peut être réduite, ce qui permet une production de vapeur plus rapide tout en conservant une autonomie de cuisson importante grâce au réservoir d'eau.

Avantageusement alors, le support à aromates sépare le réservoir d'eau de la chambre d'ébullition. Le support à aromates peut ainsi remplacer la paroi séparant le réservoir d'eau de la chambre d'ébullition.

Avantageusement encore, le support à aromates entoure la chambre d'ébullition. En d'autres termes, le support à aromates forme une couronne.

Avantageusement alors, le récipient du support à aromates est annulaire et entoure la chambre d'ébullition. Cette disposition permet de faciliter l'échauffement du récipient.

Selon une forme de réalisation, la base de production de vapeur comporte un montant annulaire sur lequel est disposé un bac récupérateur comportant une ouverture de passage de vapeur communiquant avec la chambre d'ébullition.

Avantageusement alors, le support à aromates canalise la vapeur issue de la chambre d'ébullition ainsi que la vapeur issue du récipient vers l'ouverture du bac récupérateur. Cette disposition permet de diriger la vapeur vers le récipient de cuisson en limitant les déperditions.

Avantageusement alors, le récipient du support à aromates comporte une paroi extérieure annulaire venant s'insérer dans une cheminée du bac récupérateur.

Avantageusement encore, pour faciliter le remplissage ou le nettoyage, le support à aromates est amovible.

Selon une caractéristique avantageuse, le support à aromates comporte au moins un bec verseur. Cette disposition permet de faciliter le remplissage ainsi que le versement du contenu du support à aromates.

Selon une autre caractéristique avantageuse, le support à aromates comporte un organe de préhension. Cette disposition permet de faciliter la manipulation du support à aromates, qui est échauffé lors de la cuisson.

Avantageusement alors l'organe de préhension présente une partie externe s'étendant à l'extérieur du boîtier lorsque le support à aromates est en place dans le boîtier. Cette disposition permet d'indiquer la présence du support à aromates dans la base de production de vapeur.

Avantageusement alors la partie externe présente un passage agencé au dessus d'une ouverture supérieure d'un dispositif de remplissage comportant une ouverture inférieure débouchant dans un réceptacle agencé dans le boîtier.

De préférence alors un couvercle monté sur la partie externe est susceptible d'obturer le passage.

L'invention sera mieux comprise à l'étude de deux exemples de réalisation, pris à titre nullement limitatif, illustrés dans les figures annexées, dans lesquelles :
- la figure 1 montre une vue en coupe transversale d'un premier exemple de réalisation d'une base de production de vapeur pour cuiseur à la vapeur selon l'invention, comportant un support à aromates.
- la figure 2 montre une vue en perspective d'un support à aromates appartenant à une base de production de vapeur pour cuiseur à la vapeur selon un deuxième exemple de réalisation de l'invention,
- la figure 3 montre une vue en perspective d'une base de production de vapeur pour cuiseur à la vapeur selon le deuxième exemple de réalisation de l'invention,
- la figure 4 montre une vue en perspective de la base de production de vapeur pour cuiseur à la vapeur avec le support à aromates selon le deuxième exemple de réalisation de l'invention, un couvercle étant agencé sur une ouverture du support à aromates.

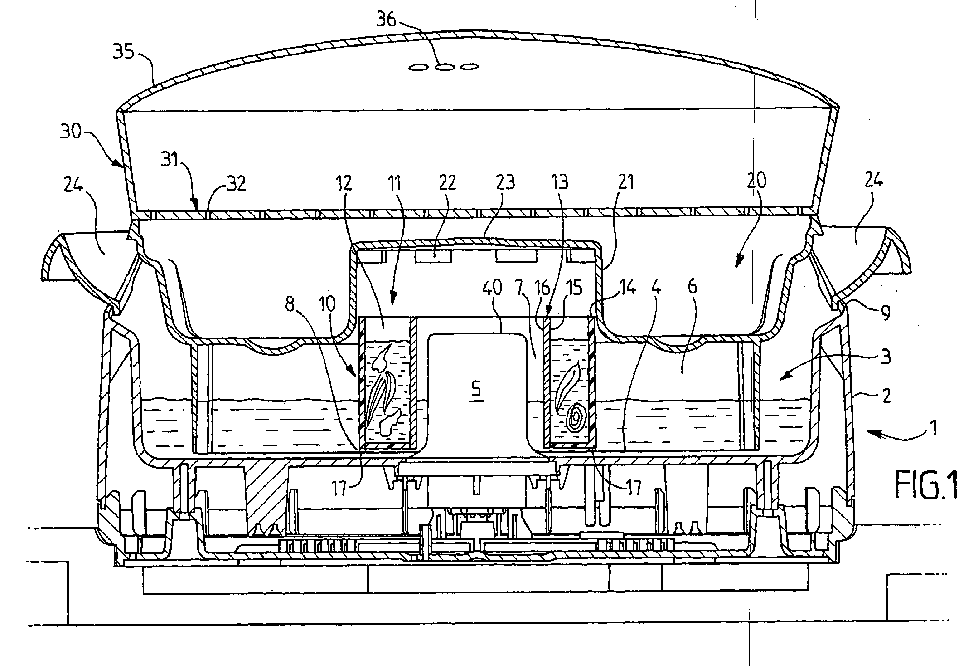

La figure 1 montre une base de production de vapeur 1 appartenant à un cuiseur vapeur. La base 1 comporte dans un boîtier 2 un réceptacle 3 prévu pour contenir de l'eau. La base 1 comprend un élément chauffant 5 électrique associé à une chambre d'ébullition 7. L'élément chauffant 5 est monté sur le fond 4 du réceptacle 3. La chambre d'ébullition 7 est alimentée par un réservoir d'eau 6. Un passage 8 relie la chambre d'ébullition 7 et le réservoir d'eau 6. Un élément séparateur 10 disposé sur le fond 4 du réceptacle 3 sépare la chambre d'ébullition 7 du réservoir d'eau 6. Le passage 8 est ménagé entre le fond de l'élément 10 et le fond 4 du réceptacle 3.

L'élément séparateur 10 est amovible et constitue un support à aromates 11 formant un récipient 12 prévu pour recevoir un liquide aromatique ou un liquide additionné d'aromates. Le support à aromates 11 est agencé entre le réservoir d'eau 6 et la chambre d'ébullition 7. Le support à aromates 11 entoure la chambre d'ébullition 7. Le support à aromates 11 comporte des pieds 17 reposant sur le fond 4 du réceptacle 3. Les pieds 17 permettent de former le passage 8 entre le réservoir d'eau 6 et la chambre d'ébullition 7. Le récipient 12 comporte une paroi latérale intérieure annulaire 13 réalisée en matériau bon conducteur de chaleur, par exemple en aluminium, reliée par un fond à une paroi latérale extérieure annulaire 14. Le récipient 12 est annulaire et entoure la chambre d'ébullition 7.

L'élément chauffant 5 présente un sommet 40 formant une protubérance par rapport au fond de la chambre d'ébullition 7. Le fond du récipient 12 est agencé plus bas que le sommet 40 de l'élément chauffant 5.

Un bac récupérateur 20 est disposé sur un montant annulaire 9 du boîtier 2. Le bac récupérateur 20 est surmonté d'un support de cuisson 30 présentant un fond 31 muni de perforations 32. Le bac récupérateur 20 permet de collecter les jus issus des aliments disposés sur le support de cuisson 30. Le support de cuisson 30 est fermé par un couvercle 35. Un ou plusieurs évents 36 sont ménagés sur le couvercle 35.

Le bac récupérateur 20 comporte une cheminée 21 présentant au moins une ouverture 22 prévue pour le passage de la vapeur issue de la chambre d'ébullition 7 ménagée autour de l'élément chauffant 5, ou issue du récipient 12. L'ouverture 22 est latérale et la cheminée 21 est fermée par un toit 23. La paroi latérale extérieure annulaire 14 du récipient 12 vient s'insérer dans la cheminée 21 lorsque le bac récupérateur 20 est disposé sur le montant annulaire 9. Le bac récupérateur 20 comporte des orifices de remplissage 24.

Le fonctionnement de la présente invention est le suivant. L'utilisateur dispose l'élément séparateur 10 autour de l'élément chauffant 5 et remplit le réservoir 12 d'un liquide aromatique et/ou d'un liquide additionné d'aromates. L'utilisateur remplit le réservoir 6 d'eau et met en place le bac récupérateur 20 puis le support de cuisson 30. Le réservoir d'eau 6 alimente la chambre d'ébullition 7 par le passage 8. L'élément chauffant 5 s'échauffe et produit de la vapeur qui est guidée par la paroi latérale intérieure 13 du récipient 12. Le support à aromates 11 canalise la vapeur issue de la chambre d'ébullition 7 ainsi que la vapeur issue du récipient 12 vers ouverture 22 du bac récupérateur 20. La vapeur est confinée par la cheminée 21 et la paroi latérale extérieure 14 du récipient 12 et s'échappe par les ouvertures latérales 22. La paroi latérale 13 délimite partiellement la périphérie de la chambre d'ébullition 7. La vapeur échauffe la face extérieure de la paroi latérale 13. La face extérieure de la paroi latérale 13 forme un élément 15 transmettant ses calories à un autre élément 16 appartenant au récipient 12, formé par la face intérieure de la paroi latérale 13. L'utilisation de la vapeur comme moyen de transmission des calories permet de limiter la température à laquelle est exposé le récipient 12. Le liquide aromatique et /ou aromatisé peut ainsi être vaporisé sans risquer de carboniser les résidus.

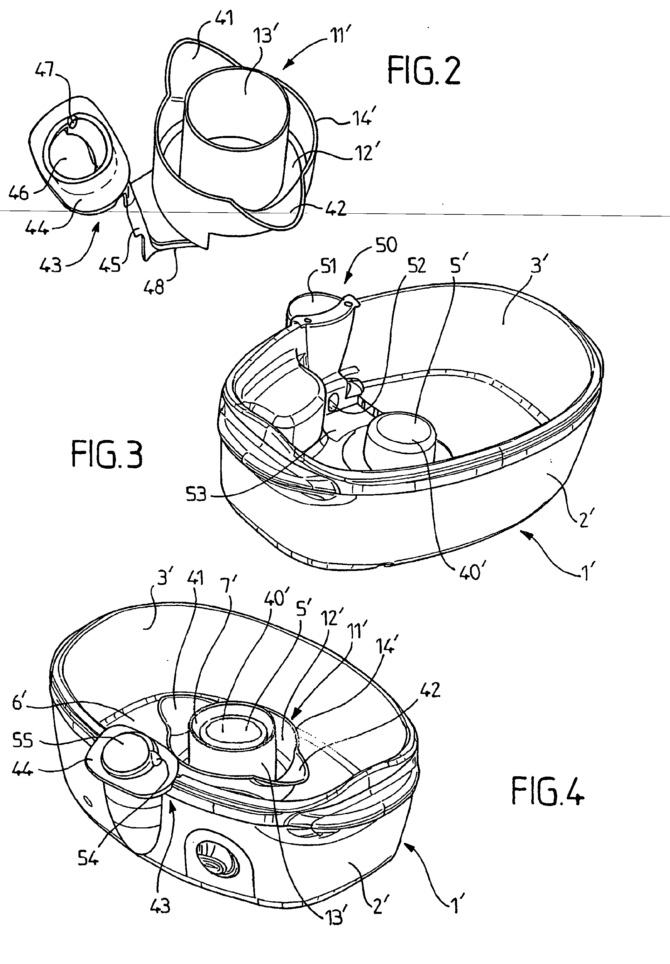

Un deuxième exemple de réalisation est illustré aux figures 2 à 4. Cet exemple de réalisation diffère de l'exemple de réalisation précédent en ce que le support à aromates 11' comporte un organe de préhension 43 et une paroi latérale extérieure annulaire 14' présentant deux becs verseurs 41, 42.

Tel que montré à la figure 2, les becs verseurs 41, 42 sont agencés de part et d'autre de la paroi latérale intérieure annulaire 13'. La paroi latérale extérieure annulaire 14' est reliée par un fond à la paroi latérale intérieure annulaire 13' et forme un récipient 12' annulaire. La paroi latérale intérieure annulaire 13' est avantageusement réalisée en matériau conduisant suffisamment la chaleur, notamment en métal, par exemple en aluminium ou en acier inoxydable, les autres parties du support à aromates étant avantageusement réalisées en matériau conduisant moins la chaleur, notamment en matière plastique, de préférence sous la forme d'une pièce moulée, par exemple en polypropylène.

Plus particulièrement, l'organe de préhension 43 est issu de la partie inférieure de la paroi latérale annulaire extérieure 14'. L'organe de préhension 43 comporte une partie externe 44 reliée par un montant 45 à la paroi latérale annulaire extérieure 14'. La partie externe 44 présente un passage 46 et un logement d'axe 47 agencé latéralement par rapport au passage 46. Une zone d'appui 48 est agencée entre le montant 45 et la paroi latérale extérieure 14'.

La figure 3 montre une base de production de vapeur 1' prévue pour recevoir le support à aromates 11'. La base de production de vapeur 1' comporte un boîtier 2' formant un réceptacle 3'. Un élément chauffant 5' est agencé dans le réceptacle 3'. L'élément chauffant 5' présente un sommet 40'. Le boîtier 2' comporte un dispositif de remplissage 50 comprenant une ouverture supérieure 51 communiquant avec une ouverture inférieure 52 débouchant dans le réceptacle 3'. Une zone de réception 53 ménagée dans le fond du réceptacle 3' est prévue pour recevoir la zone d'appui 48 du support à aromates 11'.

Tel que montré à la figure 4, le support à aromates 11' est disposé dans le réceptacle 3' du boîtier 2' de la base de production de vapeur 1'. Le récipient 12' formé par le support à aromates 11' entoure la chambre d'ébullition 7' agencée autour de l'élément chauffant 5'. La partie externe 44 de l'organe de préhension 43 s'étend à l'extérieur du boîtier 2' lorsque le support à aromates 11' est en place dans le boîtier 2'. Le réceptacle 3' forme un réservoir d'eau 6' autour du support à aromates 11'. Un espace ménagé entre le réceptacle 3' et le support à aromates 11' permet l'alimentation de la chambre d'ébullition 7' par le réservoir d'eau 6'.

Le passage 46 de la partie externe 44 est alors agencé au dessus de l'ouverture supérieure 51 du dispositif de remplissage 50. Un couvercle 55 obture le passage 46. Le couvercle 55 est monté pivotant par rapport à la partie externe 44. A cet effet, le couvercle 55 comporte un tenon prévu pour pivoter dans le logement d'axe 47. Un ergot 54 facile la rotation du couvercle 55.

Le support à aromates 11' est amovible. La mise en place du support à aromates 11' dans le boîtier 2' et le retrait du support à aromates 11' du boîtier 2' sont particulièrement aisés grâce à l'organe de préhension 43. De plus, l'échauffement limité de l'organe de préhension 43 lors du fonctionnement de la base de production de vapeur 1' permet une manipulation sans danger.

Les becs verseurs 41, 42 facilitent le versement du contenu du récipient 12', mais aussi le remplissage du récipient 12', grâce à une surface de réception plus large que l'espacement entre la paroi latérale intérieure annulaire 13' et la paroi latérale extérieure annulaire 14'.

Le remplissage du réceptacle 3' peut s'effectuer par le passage 46 et l'ouverture supérieure 51 lorsque la base de production de vapeur 1' est surmontée d'éléments de cuisson.

A titre de variante, le support à aromates 11' ne comporte pas nécessairement deux becs verseurs. De préférence le support à aromates 11' comporte au moins un bec verseur.

A titre de variante, l'élément séparateur 10 n'entoure pas nécessairement l'élément chauffant 5. La chambre d'ébullition et le réservoir d'eau sont alors adjacents mais non concentriques. Le support à aromates 11 ; 11' ne forme pas nécessairement un élément séparateur. Le support à aromates peut alors être simplement disposé dans la chambre d'ébullition.

La présente invention n'est nullement limitée à l'exemple de réalisation décrit et à ses variantes, mais englobe de nombreuses modifications dans le cadre des revendications.

La présente invention trouve une application dans le domaine des appareils électriques de cuisson à la vapeur, ainsi que dans le domaine des ustensiles de cuisson à la vapeur destinés à être disposés sur une source chauffante.

## Revendications

1. Base de production de vapeur pour cuiseur vapeur, comportant une chambre d'ébullition (7 ; 7') disposée dans un boîtier (2 ; 2') formant un réceptacle (3 ; 3'), et un support à aromates (11 ; 11') amovible par rapport au boîtier (2; 2'), le support à aromates (11; 11') formant un récipient (12 ; 12') comportant une paroi latérale (13 ; 13'), le flux de vapeur issu de la chambre d'ébullition (7 ; 7') échauffant le récipient (12 ; 12'), **caractérisé en ce que** le récipient (12 ; 12') repose sur le fond du réceptacle (3 ; 3') et **en ce que** la paroi latérale (13 ; 13') du récipient (12 ; 12') délimite partiellement la périphérie de la chambre d'ébullition (7 ; 7').

2. Base de production de vapeur selon la revendication 1, **caractérisée en ce qu'**elle comporte un élément chauffant (5 ; 5') associé à la chambre d'ébullition (7 ; 7').

3. Base de production de vapeur selon la revendication 2, **caractérisée en ce que** l'élément chauffant (5) présente un sommet (40) formant une protubérance par rapport au fond de la chambre d'ébullition (7).

4. Base de production de vapeur selon la revendication 3, **caractérisée en ce que** le fond du récipient (12) est agencé plus bas que le sommet (40) de l'élément chauffant (5).

5. Base de production de vapeur selon l'une des revendications 1 à 4, **caractérisée en ce que** le support à aromates (11) est agencé latéralement par rapport à la chambre d'ébullition (7).

6. Base de production de vapeur selon l'une des revendications 1 à 5, **caractérisée en ce que** la paroi latérale (13) est réalisée en aluminium.

7. Base de production de vapeur selon l'une des revendications 1 à 5, **caractérisée en ce que** la paroi latérale (13') est réalisée en métal.

8. Base de production de vapeur selon l'une des revendications 1 à 7, **caractérisée en ce que** la base de production de vapeur comporte un réservoir d'eau (6 ; 6') alimentant la chambre d'ébullition (7 ; 7').

9. Base de production de vapeur selon la revendication 8, **caractérisée en ce que** le support à aromates (11 ; 11') sépare le réservoir d'eau (6 ; 6') de la chambre d'ébullition (7 ; 7').

10. Base de production de vapeur selon l'une des revendications 8 ou 9, **caractérisée en ce que** le support à aromates (11 ; 11') entoure la chambre d'ébullition (7 ; 7').

11. Base de production de vapeur selon la revendication 10, **caractérisée en ce que** le récipient (12 ; 12') est annulaire et entoure la chambre d'ébullition (7 ; 7').

12. Base de production de vapeur selon l'une des revendications 1 à 11, **caractérisée en ce que** la base de production de vapeur comporte un montant annulaire (9) sur lequel est disposé un bac récupérateur (20) comportant une ouverture (22) de passage de vapeur communiquant avec la chambre d'ébullition (7).

13. Base de production de vapeur selon la revendication 12, **caractérisée en ce que** le support à aromates (11) canalise la vapeur issue de la chambre d'ébullition (7) ainsi que la vapeur issue du récipient (12) vers l'ouverture (22) du bac récupérateur (20).

14. Base de production de vapeur selon la revendication 13, **caractérisée en ce que** le récipient (12) comporte une paroi extérieure annulaire (14) venant s'insérer dans une cheminée (21) du bac récupérateur (20).

15. Base de production de vapeur selon l'une des revendications 1 à 14, **caractérisée en ce que** le support à aromates (11') comporte au moins un bec verseur (41, 42).

16. Base de production de vapeur selon l'une des revendications 1 à 15, **caractérisée en ce que** le support à aromates (11') comporte un organe de préhension (43).

17. Base de production de vapeur selon la revendication 16, **caractérisée en ce que** l'organe de préhension (43) présente une partie externe (44) s'étendant à l'extérieur du boîtier (2') lorsque le support à aromates (11') est en place dans le boîtier (2').

18. Base de production de vapeur selon la revendication 17, **caractérisée en ce que** la partie externe (44) présente un passage (46) agencé au dessus d'une ouverture supérieure (51) d'un dispositif de remplissage (50) comportant une ouverture inférieure (52) débouchant dans un réceptacle (3') agencé dans le boîtier (2').

19. Base de production de vapeur selon la revendication 18, **caractérisée en ce qu'**un couvercle (55) monté sur la partie externe (44) est susceptible d'obturer le passage (46).

20. Base de production de vapeur selon- l'une des revendications 1 à 19, **caractérisée en ce que** le support à aromates (11; 11') est en contact avec l'eau présente dans la chambre d'ébullition (7 ; 7').

21. Base de production de vapeur selon l'une des revendications 1 à 20, **caractérisée en ce que** le récipient (12 ; 12') est en contact avec l'eau présente dans la chambre d'ébullition (7 ; 7').

## Claims

1. A steam-generator base for a steam cooker, said base including a boiler chamber (7; 7') disposed in a housing (2; 2') forming a tank (3; 3'), and a flavoring substance support (11; 11') that is removable relative to the housing (2; 2'), the flavoring substance support (11; 11') forming a receptacle (12; 12') having a side wall (13; 13'), the flow of steam coming from the boiler chamber (7; 7') heating the receptacle (12; 12'), said steam-generator base being **characterized in that** the receptacle (12; 12') stands on the bottom of the tank (3; 3'), and **in that** the side wall (13; 13') of the receptacle (12; 12') defines in part the periphery of the boiler chamber (7; 7').

2. A steam-generator base according to claim 1, **characterized in that** it includes a heater element (5; 5') associated with the boiler chamber (7; 7').

3. A steam-generator base according to claim 2, **characterized in that** the heater element (5) has a top (40) forming a protuberance relative to the bottom of the boiler chamber (7).

4. A steam-generator base according to claim 3, **characterized in that** the bottom of the receptacle (12) is arranged lower than the top (40) of the heater element (5).

5. A steam-generator base according to any one of claims 1 to 4, **characterized in that** the flavoring substance support (11) is arranged laterally relative to the boiler chamber (7).

6. A steam-generator base according to any one of claims 1 to 5, **characterized in that** the side wall (13) is made of aluminum.

7. A steam-generator base according to any one of claims 1 to 5, **characterized in that** the side wall (13') is made of metal.

8. A steam-generator base according to any one of claims 1 to 7, **characterized in that** the steam-generator base includes a water reservoir (6; 6') feeding the boiler chamber (7; 7').

9. A steam-generator base according to claim 8, **characterized in that** the flavoring substance support (11; 11') separates the water reservoir (6; 6') from the boiler chamber (7; 7').

10. A steam-generator base according to claim 8 or claim 9, **characterized in that** the flavoring substance support (11; 11') surrounds the boiler chamber (7; 7').

11. A steam-generator base according to claim 10, **characterized in that** the receptacle (12; 12') is annular and surrounds the boiler chamber (7; 7').

12. A steam-generator base according to any one of claims 1 to 11, **characterized in that** the steam-generator base has an annular upright (9) on which a collector pan (20) is disposed that is provided with a steam-passing opening (22) that communicates with the boiler chamber (7).

13. A steam-generator base according to claim 12, **characterized in that** the flavoring substance support (11) channels the steam coming from the boiler chamber (7) and the steam coming from the receptacle (12) towards the opening (22) in the collector pan (20).

14. A steam-generator base according to claim 13, **characterized in that** the receptacle (12) has an annular outer wall (14) that becomes engaged in a chimney (21) of the collector pan (20).

15. A steam-generator base according to any one of claims 1 to 14, **characterized in that** the flavoring substance support (11') is provided with at least one spout (41, 42).

16. A steam-generator base according to any one of claims 1 to 15, **characterized in that** the flavoring substance support (11') is provided with a handle-forming member (43).

17. A steam-generator base according to claim 16, **characterized in that** the handle-forming member (43) has an outer portion (44) that extends outside the housing (2') when the flavoring substance support (11') is in place in the housing (2').

18. A steam-generator base according to claim 17, **characterized in that** the outer portion (44) is provided with a passageway (46) arranged above a top opening (51) in a filling device (50) having a bottom opening (52) that opens out in a tank (3') arranged in a housing (2').

19. A steam-generator base according to claim 18, **characterized in that** a lid (55) mounted on the outer portion (44) is suitable for closing off the passageway (46).

20. A steam-generator base according to any one of claims 1 to 19, **characterized in that** the flavoring substance support (11; 11') is in contact with the water present in the boiler chamber (7; 7').

21. A steam-generator base according to any one of claims 1 to 20, **characterized in that** the receptacle (12; 12') is in contact with the water present in the boiler chamber (7; 7').

## Patentansprüche

1. Dampferzeugungssockel für einen Dampfkocher, mit einer Siedekammer (7; 7'), die in einem Gehäuse (2; 2') angeordnet ist, das einen Auffang (3; 3') bildet, und mit einem Gewürzträger (11; 11'), der bezüglich des Gehäuses (2; 2') abnehmbar ist, wobei der Gewürzträger (11; 11') ein Gefäß (12; 12') mit einer Seitenwand (13; 13') bildet, wobei der Dampfstrom aus der Siedekammer (7; 7') das Gefäß (12; 12') erwärmt, **dadurch gekennzeichnet, dass** das Gefäß (12; 12') auf dem Boden des Auffangs (3; 3') aufliegt und die Seitenwand (13; 13') des Gefäßes (12; 12') den Umfang der Siedekammer (7; 7') teilweise begrenzt.

2. Dampferzeugungssockel nach Anspruch 1, **dadurch gekennzeichnet, dass** er ein der Siedekammer (7; 7') zugeordnetes Heizelement (5, 5') aufweist.

3. Dampferzeugungssockel nach Anspruch 2, **dadurch gekennzeichnet, dass** das Heizelement (5) einen Kopf (40) aufweist, der bezüglich des Bodens der Siedekammer (7) einen Vorsprung bildet.

4. Dampferzeugungssockel nach Anspruch 3, **dadurch gekennzeichnet, dass** der Boden des Gefäßes (12) tiefer angeordnet ist als der Kopf (40) des Heizelements (5).

5. Dampferzeugungssockel nach einem der Ansprüche 1 bis 4, **dadurch gekennzeichnet, dass** der Gewürzträger (11) bezüglich der Siedekammer (7) seitlich angeordnet ist.

6. Dampferzeugungssockel nach einem der Ansprüche 1 bis 5, **dadurch gekennzeichnet, dass** die Seitenwand (13) aus Aluminium hergestellt ist.

7. Dampferzeugungssockel nach einem der Ansprüche 1 bis 5, **dadurch gekennzeichnet, dass** die Seitenwand (13') aus Metall hergestellt ist.

8. Dampferzeugungssockel nach einem der Ansprüche 1 bis 7, **dadurch gekennzeichnet, dass** der Dampferzeugungssockel einen Wasserbehälter aufweist (6; 6'), der die Siedekammer (7; 7') speist.

9. Dampferzeugungssockel nach Anspruch 8, **dadurch gekennzeichnet, dass** der Gewürzträger (11; 11') den Wasserbehälter (6; 6') von der Siedekammer (7; 7') trennt.

10. Dampferzeugungssockel nach Anspruch 8 oder 9, **dadurch gekennzeichnet, dass** der Gewürzträger (11; 11') die Siedekammer (7; 7') umgibt.

11. Dampfererzeugungssockel nach Anspruch 10, **dadurch gekennzeichnet, dass** das Gefäß (12; 12') ringförmig ist und die Siedekammer (7; 7') umgibt.

12. Dampferzeugungssockel nach einem der Ansprüche 1 bis 11, **dadurch gekennzeichnet, dass** der Dampferzeugungssockel eine ringförmige Strebe (9) aufweist, an der ein Sammelbehälter (20) mit einer mit der Siedekammer (7) verbundenen Dampfdurchlassöffnung (22) angeordnet ist.

13. Dampferzeugungssockel nach Anspruch 12, **dadurch gekennzeichnet, dass** der Gewürzträger (11) den Dampf aus der Siedekammer (7) und den Dampf aus dem Gefäß (12) zur Öffnung (22) des Sammelbehälters (20) kanalisiert.

14. Dampferzeugungssockel nach Anspruch 13, **dadurch gekennzeichnet, dass** das Gefäß (12) eine ringförmige Außenwand (14) aufweist, die in einen Schacht (21) des Sammelbehälters (20) eingesetzt ist.

15. Dampferzeugungssockel nach einem der Ansprüche 1 bis 14, **dadurch gekennzeichnet, dass** der Gewürzträger (11') mindestens eine Tülle (41, 42) aufweist.

16. Dampferzeugungssockel nach einem der Ansprüche 1 bis 15, **dadurch gekennzeichnet, dass** der Gewürzträger (11') ein Greiforgan (43) aufweist.

17. Dampferzeugungssockel nach Anspruch 16, **dadurch gekennzeichnet, dass** das Greiforgan (43) einen äußeren Teil (44) aufweist, der sich außerhalb des Gehäuses (2') erstreckt, wenn der Gewürzträger (11') im Gehäuse (2') angeordnet ist.

18. Dampferzeugungssockel nach Anspruch 17, **dadurch gekennzeichnet, dass** der äußere Teil (44) einen Durchgang (46) aufweist, der über einer oberen Öffnung (51) einer Füllvorrichtung (50) angeordnet ist, welche eine untere Öffnung (52) aufweist, die in einen im Gehäuse (2') angeordneten Auffang (3') mündet.

19. Dampferzeugungssockel nach Anspruch 18, **dadurch gekennzeichnet, dass** ein am äußeren Teil (44) angebrachter Deckel (55) den Durchgang (46) verschließen kann.

20. Dampferzeugungssockel nach einem der Ansprüche 1 bis 19, **dadurch gekennzeichnet, dass** der Gewürzträger (11; 11') mit dem in der Siedekammer (7; 7') vorhandenen Wasser in Kontakt ist.

21. Dampferzeugungssockel nach einem der Ansprüche 1 bis 20, **dadurch gekennzeichnet, dass** das Gefäß (12; 12') mit dem in der Siedekammer (7; 7') vorhandenen Wasser in Kontakt ist.
